# EUROPEAN PATENT APPLICATION

(11) **EP 4 692 970 A1**
(43) Date of publication of application: **11.02.2026**
(21) Application number: 24780860.3
(22) Date of filing: 29.03.2024
(51) Int. Cl.: G05B 23/02, G05B 19/418

(54) **GUIDANCE DISPLAY METHOD, GUIDANCE DISPLAY SYSTEM, AND GUIDANCE DISPLAY PROGRAM**

(30) Priority: 31.03.2023 JP 2023058109
(71) Applicant: Daicel Corporation, Osaka-shi, Osaka 530-0011 (JP)
(72) Inventor: OKA, Hiroki, Tokyo 108-8230 (JP); TAKETSUGU, Yuki, Tokyo 108-8230 (JP); HORIKAWA, Keiichi, Tokyo 108-8230 (JP)
(74) Representative: Grünecker Patent- und Rechtsanwälte PartG mbB
(86) International application number: PCT/JP2024/013185
(87) International publication number: WO 2024/204765

(57) **Abstract**

To facilitate maintenance of guidance displayed in accordance with an abnormality or the like occurring in a production facility. The guidance display method performed by one or more computers includes acquiring process data output by a sensor included in a production facility and providing a user terminal with a monitoring screen for monitoring a production process performed by the production facility, the monitoring screen including the process data, calculating a degree of causality for each of a plurality of candidates for causes of an abnormality or a sign thereof by using the process data and a predetermined determination model, specifying the cause of the calculated degree of causality satisfying a predetermined condition, and outputting guidance information corresponding to the specified cause to the monitoring screen by using a guidance definition storing a plurality of combinations of the causes of the abnormality or the sign thereof and guidance information associated with the causes. Furthermore, the guidance information can be changed by updating the guidance definition.

## Description

### Technical Field

The present disclosure relates to a guidance display method, a guidance display system, and a guidance display program.

### Background Art

The related art proposes an abnormal irregularity cause display device that improves the accuracy of specifying causes of abnormal irregularity in a production facility and proposes suitable measures to a user (Patent Document 1). The device includes a process data acquisition unit for reading, from a storage device storing process data continuously output by a plurality of sensors provided in the production facility, the process data, an abnormality determination unit for calculating a degree of abnormality representing the extent of irregularity in the process data read by the process data acquisition unit, a cause diagnosing unit for determining, for the process data output by the plurality of sensors, whether the degree of abnormality calculated by the abnormality determination unit satisfies a prescribed standard by using causal relationship information defining a combination of a cause and the irregularity of the process data manifested as an effect arising from the cause and output by the plurality of sensors, and an output control unit for reading, from the storage device further storing information indicating measures to be taken with respect to the cause, information indicating the measures and causing an output device to output the information.

### Citation List

### Patent Document

Patent Document 1: WO 2021/241577

### Summary of Invention

### Technical Problem

A screen directly describing guidance for each content of the guidance is created in order to display the guidance corresponding to a predicted cause to an operator in accordance with an abnormality detected in the production facility and a sign thereof. Thus, when the guidance screen is created or changed, the description of each screen needs to be created or changed, which takes time and effort. An object of the present disclosure is to provide a technique for facilitating maintenance of guidance displayed in accordance with an abnormality or the like occurring in a production facility.

### Solution to Problem

A guidance display method according to the present disclosure can be implemented by the following aspects.

### First Aspect

A guidance display method performed by one or more computers includes: acquiring process data output by a sensor included in a production facility and providing a user terminal with a monitoring screen for monitoring a production process performed by the production facility, the monitoring screen including the process data; calculating a degree of causality for each of a plurality of candidates for causes of an abnormality or a sign thereof by using the process data and a predetermined determination model; specifying the cause of the calculated degree of causality satisfying a predetermined condition; and outputting guidance information corresponding to the specified cause to the monitoring screen by using a guidance definition storing a plurality of combinations of the causes of the abnormality or the sign thereof and guidance information associated with the causes.

Furthermore, the guidance information can be changed by updating the guidance definition.

### Second Aspect

In the first aspect, the guidance definition may include information to be displayed on a predetermined portion in a predetermined template of the monitoring screen and information for specifying a portion to be highlighted in the template.

### Third Aspect

In the second aspect, when the cause of the calculated degree of causality satisfying the predetermined condition is specified, the one or more computers may determine an operation amount for a device included in the production facility, and the monitoring screen may display the determined operation amount at a predetermined position in the template.

### Fourth Aspect

In the second or third aspect, the template may be created in a file readable and writable by spreadsheet software.

### Fifth Aspect

In any one of the second to fourth aspects, the template may be stored in a storage device of the user terminal.

### Sixth Aspect

In any one of the first to fifth aspects, one or more combinations stored in the guidance definition may be associated with one alarm set in an annunciator, and an alarm associated with the cause of the calculated degree of causality satisfying the predetermined condition may be issued.

### Seventh Aspect

In any one of the first to sixth aspects, the production facility may be a chemical process plant, and the monitoring screen may be displayed in cooperation with a control program of a distributed control system (DCS).

Note that the contents described in Solution to Problem can be combined as much as possible without departing from the problems and technical idea of the present disclosure. Furthermore, the contents of Solution to Problem can be provided as a system including a device such as a computer or a plurality of devices, a method performed by one or more computers, or a program executed by one or more computers. Note that a recording medium for storing the program may be provided.

### Advantageous Effects of Invention

The technique of the disclosure can provide a technique for facilitating maintenance of guidance displayed in accordance with an abnormality or the like occurring in a production facility.

### Brief Description of Drawings

FIG. 1 is a diagram illustrating an example of a system.
FIG. 2 is a schematic diagram illustrating an example of a process.
FIG. 3 is a diagram for explaining an example of process data in a batch stage.
FIG. 4 is a diagram for explaining an example of process data in a continuous stage.
FIG. 5 is a diagram for explaining association between the process data in the continuous stage and a product serial number in the batch stage.
FIG. 6 is a block diagram illustrating an example of a control station, an abnormality detection device, and an operation assistance system.
FIG. 7 is a diagram showing an example of a knowledge base table.
FIG. 8 is a diagram illustrating an example of a logic tree.
FIG. 9 is a diagram showing an example of a guidance definition.
FIG. 10 is a schematic sequence diagram illustrating an example of abnormality detection processing.
FIG. 11 is a diagram for explaining a guidance list.
FIG. 12 is a diagram for explaining an assumed cause list.
FIG. 13 is a diagram for explaining assumed cause guidance.

### Description of Embodiments

Hereinafter, an embodiment of an abnormality detection device is described with reference to the drawings.

### Embodiment

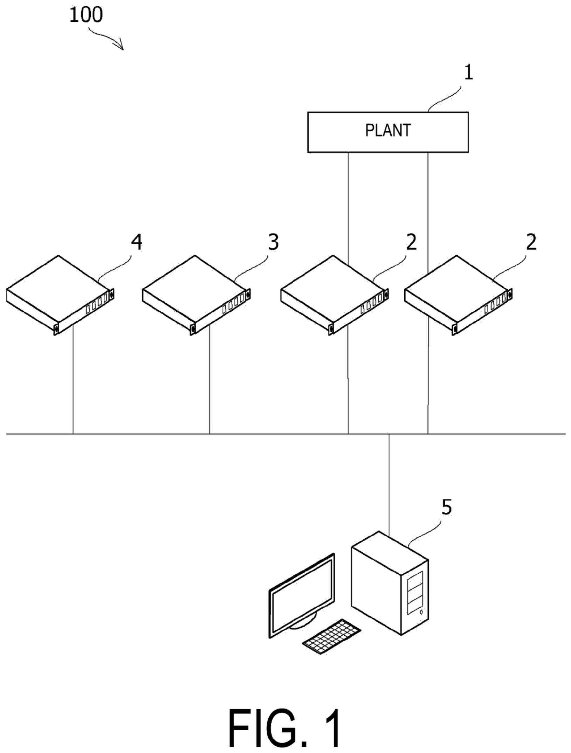

FIG. 1 is a diagram illustrating an example of a system according to the present embodiment. A system 100 includes a plant 1, a control station 2, an abnormality detection device 3, an operation assistance system 4, and a user terminal 5. The system 100 is, for example, a distributed control system (DCS) and includes a plurality of control stations 2. That is, a control system of the plant 1 is divided into a plurality of sections, and distributed control is performed by the control stations 2 for each of the control sections.

The plant 1 is, for example, a chemical process plant, and is configured by connecting a reactor, a distillation device, a heat exchanger, a compressor, a pump, a tank, and the like via pipes. Furthermore, sensors, valves, and the like are provided at predetermined positions on the devices and pipes. The sensors may include a thermometer, a flow meter, a pressure gauge, a level meter, a densitometer, and the like. Furthermore, each of the sensors monitors the operating state of a respective device and outputs a state signal. Furthermore, the sensor is assumed to be attached with a "tag" indicating identification information for specifying the sensor. That is, the system 100 can specify the type of process data based on the tag. The plant 1 is not limited to a chemical process plant, and may be any production facility.

The control station 2 receives state signals (so-called process data) output from the sensors or the like included in the plant 1, or outputs a control signal to the plant 1. Based on the control signal, actuators such as valves and other devices included in the plant 1 are controlled. The control station 2 outputs information indicating the operating state of the plant 1 to the user terminal 5, and functions as an annunciator that outputs an alarm or the like to the user terminal 5 when an abnormality is detected. At this time, action candidates may be output to the user terminal 5 based on a table storing the cause of the abnormality or a sign thereof and an action for coping with the abnormality and a specified cause. The process data includes a temperature, pressure, a flow rate, and the like of a processing target that is a raw material or a product, a set value for determining an operating condition of the device included in the plant 1, or the like. Note that an abnormality or a sign thereof, which is a change occurring in the processing target or the device of the plant 1 and deviating from a scheduled range, is also referred to as "irregularity" in the present embodiment.

The abnormality detection device 3 acquires the state signal (process data) of the plant 1 via the control stations 2. The abnormality detection device 3 is assumed to include a determination model for predicting an abnormality occurring in a production process, a sign of the abnormality, and a cause of the abnormality in advance by using the process data. Subsequently, the abnormality detection device 3 calculates the degree of causality of a predetermined abnormal state by using the process data.

The operation assistance system 4 monitors the degree of causality calculated by the abnormality detection device 3, and operates the annunciator when the degree of causality exceeds a predetermined threshold value, for example.

The user terminal 5 is a computer used by a user such as an operator who operates the plant 1. A monitoring screen for monitoring the production process performed by the plant 1 is displayed on the user terminal 5 via the control station 2. The user terminal 5 may store data used as a template of a screen to be displayed. That is, the monitoring screen may be created by incorporating information acquired from the control station 2 or the like at a predetermined position of the template.

### Manufacturing Process

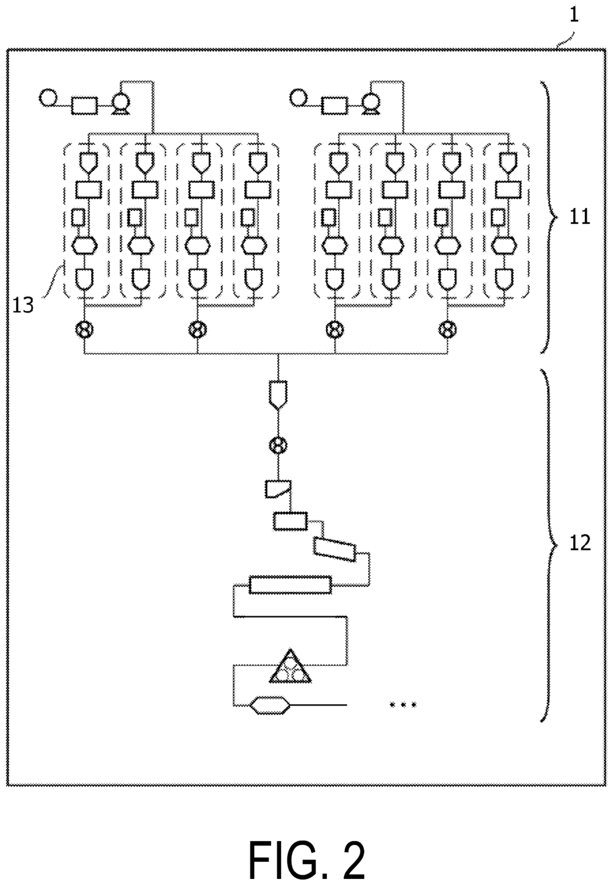

FIG. 2 is a schematic diagram illustrating an example of a process performed by the device included in the plant 1. In the present embodiment, for example, a production plant for manufacturing a resin is described as an example. The manufacturing process may include a batch stage 11 and a continuous stage 12. In the batch stage 11, processing targets are sequentially processed for each predetermined transaction, and for example, processing such as receiving, storing, and discharging a raw material with respect to each device is performed in order. In the continuous stage 12, successively introduced processing targets are continuously subjected to processing such as receiving, storing, and discharging. Furthermore, the process may include a plurality of sequences 13 that perform the same processing in parallel.

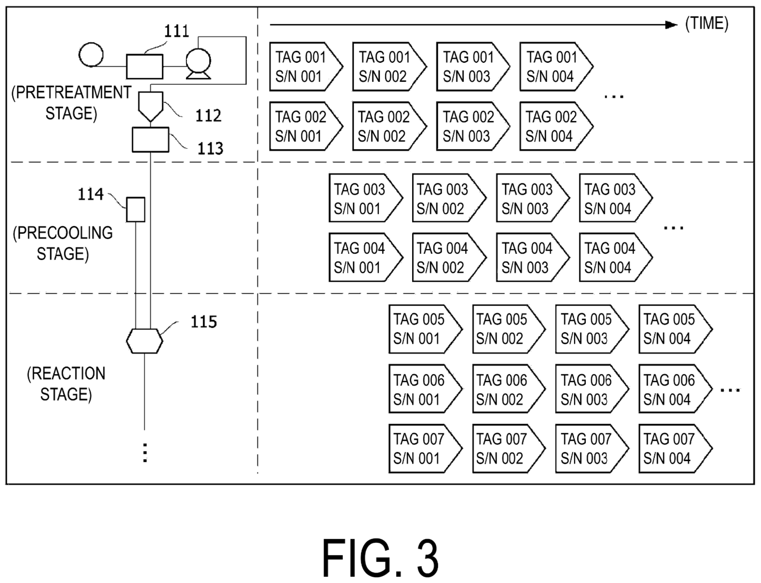

FIG. 3 is a diagram for explaining an example of process data in the batch stage. The left column in FIG. 3 indicates some of the processes of the batch stage 11 illustrated in FIG. 2. Specifically, the processes include a shredder 111, a cyclone 112, a pretreatment machine 113, a precooler 114, and a reactor 115. Furthermore, the processes are classified into a pretreatment stage, a precooling stage, and a reaction stage. The right column in FIG. 3 indicates an example of process data acquired in each process. In the pretreatment stage, time-series data are acquired from sensors with tags 001 and 002. In the precooling stage, time-series data are acquired from sensors with tags 003 and 004. In the reaction stage, time-series data are acquired from sensors with tags 005, 006, and 007. Furthermore, in the batch stage, a processing target associated with a product serial number (also referred to as "S/N") is intermittently processed. That is, the product serial number is identification information for identifying each of the processing targets to be collectively processed in the batch stage. As illustrated in FIG. 3, time-series data related to a processing target associated with a subsequent product serial number is obtained over time. For example, each of the control stations 2 manages a product serial number and a step indicating a phase of processing in each of the subdivided stages constituting the batch stage.

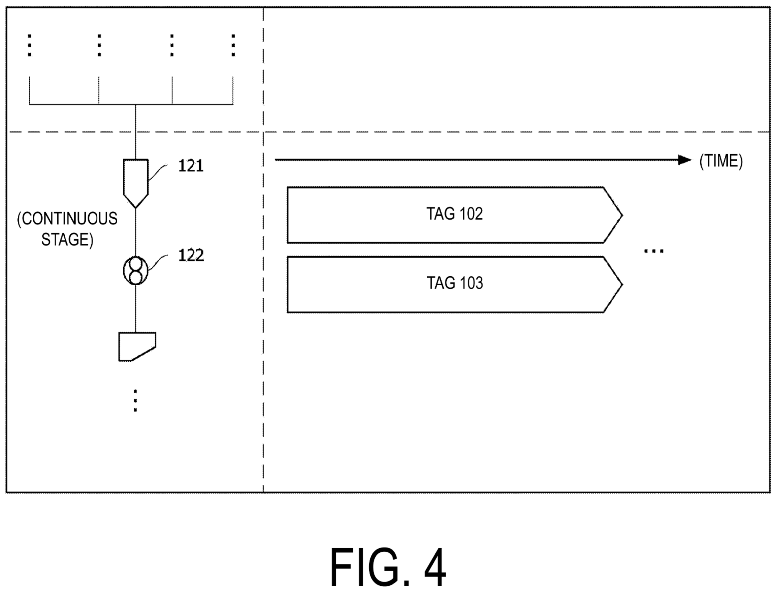

FIG. 4 is a diagram for explaining an example of process data in the continuous stage. The left column in FIG. 4 indicates some of the processes of the continuous stage 12 illustrated in FIG. 2. Specifically, the processes include a tank 121 and a pump 122. The right column in FIG. 4 indicates an example of process data acquired in each process. In the continuous stage 12, time-series data associated with tags and associated with no product serial number are continuously acquired from sensors or imaging devices. In the continuous stage, the time-series data is acquired from each of the sensors with tags 102 and 103. In the continuous stage, the device continuously receives a processing target and continuously performs processing.

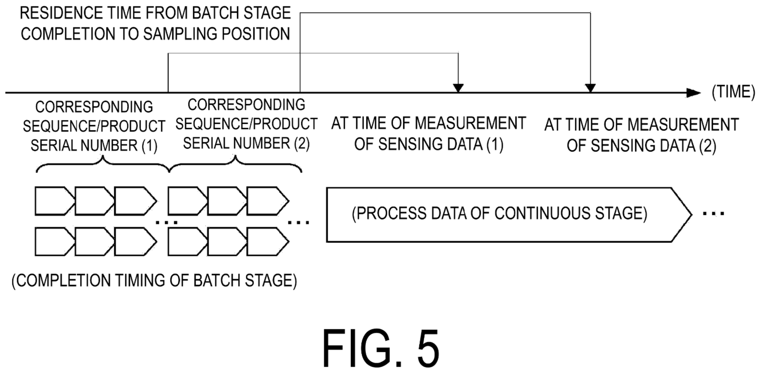

FIG. 5 is a diagram for explaining association between the process data in the continuous stage and the product serial number in the batch stage. The process data is acquired at preset intervals as traceability information, for example. The traceability information includes a sampling interval and a residence time. The sampling interval represents an interval for performing sampling in the continuous stage. The residence time represents the time for which a processing target stays until the process included in the continuous stage is reached from the completion of the batch stage. That is, when the continuous stage is performed after the batch stage, products by the batch stage completed in a certain period of time are introduced into a tank or the like as a processing target in the continuous stage. Accordingly, the process data in the continuous stage can be roughly associated with a product serial number group whose completion time of the batch stage is included in a predetermined period of time by tracing back the residence time of the processing target from the completion of the batch stage to the time of measurement by the sensor. By such an association, when the batch stage and the continuous stage are continuously performed, the accuracy of specifying an abnormality cause can be improved.

### Device Configuration

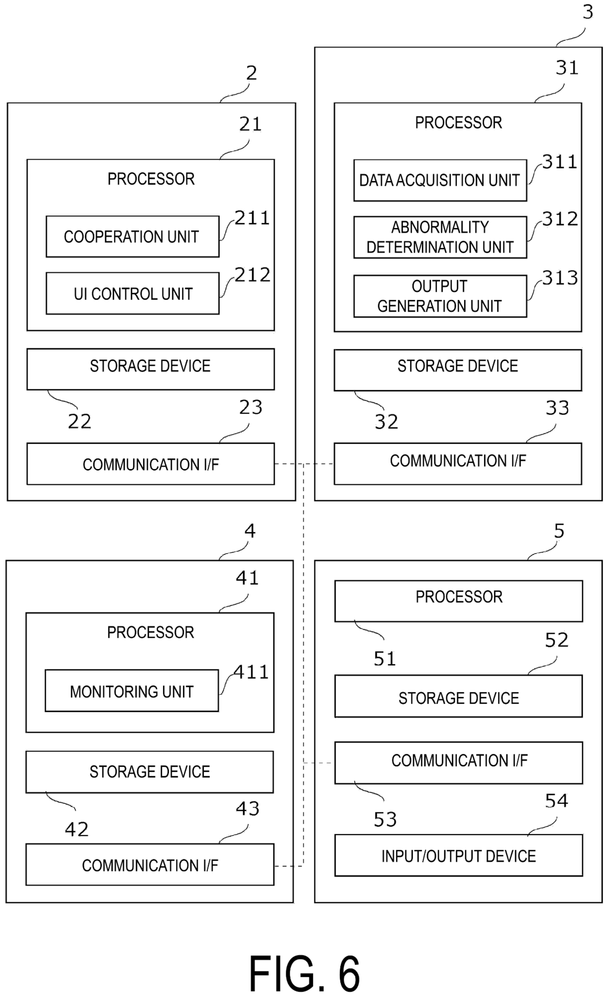

FIG. 6 is a block diagram illustrating an example of the control station 2, the abnormality detection device 3, and the operation assistance system 4. The control station 2 is a computer and includes a processor 21, a storage device 22, and a communication interface (I/F) 23. The processor 21 is an arithmetic processing device such as a central processing unit (CPU) and performs each processing according to the present embodiment by executing a program. In the example in FIG. 6, functional blocks are illustrated in the processor 21. That is, the processor 21 functions as a cooperation unit 211 and a user interface (UI) control unit 212 by executing a predetermined program. The cooperation unit 211 acquires process data from the plant 1 and stores the process data in the storage device 22, or controls the plant 1 based on an operation on the user terminal 5. The cooperation unit 211 stores data received from another device in the storage device 22, or outputs data to another device based on the data stored in the storage device 22. The UI control unit 212 issues an annunciator (alarm) to the user terminal 5 or creates display data to be output to a monitor of the user terminal 5, based on the data stored in the storage device 22. In the present embodiment, the operation assistance system 4 updates linked information that triggers the annunciator to issue an alarm, and dynamically changes the display data to be output to the user terminal 5 in accordance with the linked information. The storage device 22 may be a main storage device such as a random access memory (RAM) or a read only memory (ROM), and an auxiliary storage device (secondary storage device) such as a hard-disk drive (HDD), a solid state drive (SSD), or a flash memory. The main storage device temporarily stores a program to be read by the processor 21 and information transmitted to and received from other computers and secures a work area of the processor 21. The auxiliary storage device stores a program to be executed by the processor 21 and information and the like transmitted to and received from other computers. The communication I/F 23 may be, for example, a network card or a communication module and communicates with another computer based on a predetermined protocol.

The abnormality detection device 3 is also a computer, and includes a processor 31, a storage device 32, and a communication I/F 33. The components are basically similar to the processor 21, the storage device 22, and the communication I/F 23 of the control station 2. The storage device 32 of the abnormality detection device 3 is assumed to store in advance a knowledge base table defining a combination of causal relationships between causal events and changes in process data caused by the causal events, and a determination model for calculating the degree of causality for each causal event. Furthermore, the processor 31 functions as a data acquisition unit 311, an abnormality determination unit 312, and an output generation unit 313 by executing a predetermined program. The data acquisition unit 311 acquires process data via the control station 2 and stores the process data in the storage device 32. The abnormality determination unit 312 calculates the degree of causality of causes of an abnormality or a sign thereof by using the process data and the determination model. The output generation unit 313 creates display data including an action (countermeasure) for suppressing an abnormal irregularity and trend information of the process data by using the process data, the knowledge base table, and the determination model. The display data may be incorporated in a guidance screen output from the control station 2 to the user terminal 5. The display data may be, for example, a file that can be read and written by spreadsheet software or a word processor, a text file, a record of a database, or the like. In this way, information to be output to the user terminal 5 can be added or changed without modifying the program executed in the control station 2. That is, since the guidance screen can be changed without changing a program or the like operating in the control station 2 in the DCS, the change can be quickly reflected in the system 100 when the handling at the time of abnormality of the plant 1 needs to be improved. The output generation unit 313 may continuously create trend information indicating a trend of a change in the process data and output the trend information in response to a request from the user terminal 5. The trend information may also include, for example, a graph in which the value of the process data or the statistic thereof in a predetermined period of time is plotted.

The operation assistance system 4 is also a computer, and includes a processor 41, a storage device 42, and a communication I/F 43. The components are also basically similar to the processor 21, the storage device 22, and the communication I/F 23 of the control station 2. The storage device 42 of the operation assistance system 4 is assumed to store a guidance definition in advance. The guidance definition is information in which an assumed cause of an abnormality or a sign thereof, a type of an annunciator to be issued by the control station 2, and guidance information to be output to the user terminal 5 (guidance screen) are recorded in association with one another. The processor 41 functions as a monitoring unit 411 by executing a predetermined program. The monitoring unit 411 monitors the information stored in the storage device 22 of the control station 2, and turns on the operation setting of the annunciator when an abnormality or a sign thereof is detected.

The user terminal 5 is also a computer, and includes a processor 51, a storage device 52, a communication I/F 53, and an input/output device 54. The processor 51, the storage device 52, and the communication I/F 53 are basically similar to the processor 21, the storage device 22, and the communication I/F 23 of the control station 2, respectively. The input/output device 54 is, for example, a user interface (UI) such as a display, a touch panel, a keyboard, a mouse, a microphone, and a speaker. The input/output device 54 receives an operation of a user and outputs information to the user. That is, the user terminal 5 functions as a UI of the DCS. The storage device 52 of the user terminal 5 may store in advance data used as a template of a screen to be displayed. In this case, the processor 51 creates a monitoring screen by loading information acquired from the control station 2 or the like at a predetermined position on the template, and causes the input/output device 54 such as a display to output the monitoring screen. For example, at least a part of the monitoring screen may be created by data that can be read and written by predetermined software such as spreadsheet software. The processor 51 reads display data created by the control station 2 and displays the read display data on a part of the monitoring screen.

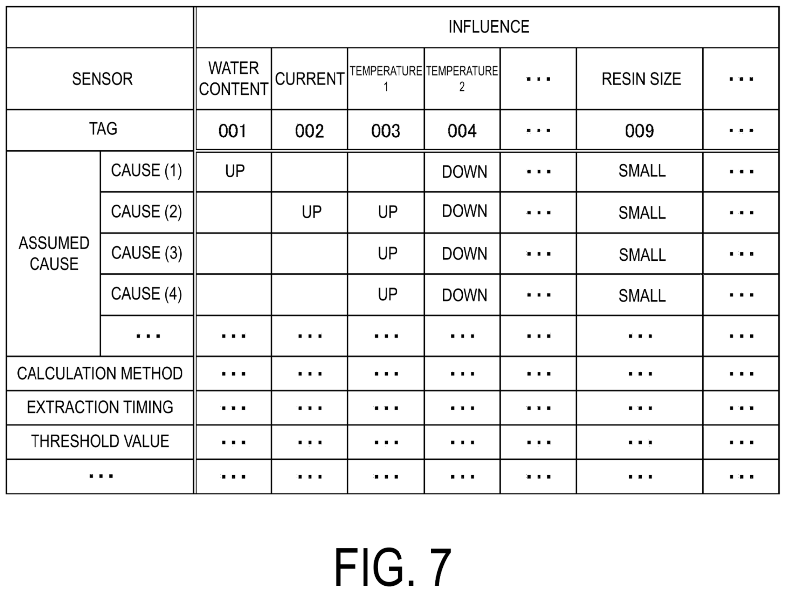

FIG. 7 is a diagram illustrating an example of information pre-registered in the knowledge base table. The knowledge base table is assumed to be stored in advance in the storage device of the abnormality detection device 3. The table in FIG. 7 includes columns "influence" corresponding to sensors or imaging devices (tags) and rows indicating "assumed causes" of an irregularity. That is, a direction of variation of each value is registered in columns corresponding to the sensors affected by the causes such as "cause 1" or "cause 2" shown in each row. In the knowledge base table, the direction of variation is displayed as "up" representing an increase (rise) or "down" representing a decrease (reduction) in a sensor output value. Note that as illustrated in FIG. 7, the combination of the cause and the influence is not limited to a one-to-one relationship. Furthermore, a calculation method, an extraction timing, a threshold value used for abnormality determination, and the like of the process data are defined in association with each sensor. In a row of the calculation method, information indicating a calculation technique performed using an output value of each sensor is registered. For example, in the batch processing, the timing may be defined by a step indicating a phase of processing in each stage, a certain period of time, a certain time point, or the like. In the continuous processing, the timing may be defined by a sampling interval or the like. In a row of the threshold value, a threshold value that is a reference for determining an abnormality in each abnormality determination technique is registered. The threshold value may include, for example, two values: an upper limit and a lower limit. As described above, the knowledge base table defines a combination of causal relationships between causal events and an influence that is the irregularity of process data caused by the causal events. Based on the information set in the table as described above, the abnormality detection device 3 extracts data at a predetermined timing from the process data acquired from the plant 1 and performs abnormality determination by a predetermined technique. Note that the combination of causal relationships can be represented by a tree format in which, by using an irregularity appearing as an influence as a root and an assumed cause of the irregularity as a leaf, events appearing in the course from the cause to the irregularity are connected in a hierarchical manner along time series.

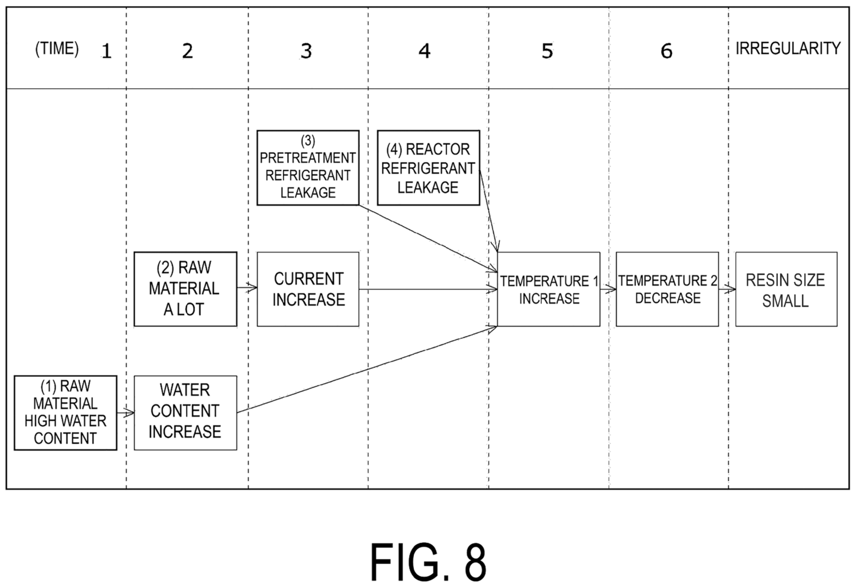

FIG. 8 is a diagram illustrating an example of a logic tree representing a relationship between an abnormality or a sign and cause thereof. The logic tree represents a calculation performed by the determination model stored in advance in the storage device of the abnormality detection device 3. In the logic tree in FIG. 8, an event that is upstream in a production stage and earlier in the time series is arranged on the left side, an event that is downstream in the production stage and later in the time series is arranged on the right side, and the events are connected in a hierarchical manner by using an arrow from the assumed cause to the irregularity appearing as an influence. Furthermore, in the logic tree, when a plurality of assumed causes exist for one irregularity in the knowledge base table, events are branched and connected, and events appearing in common in the course from the assumed causes to the irregularity are grouped together and displayed. A thick solid-line rectangle located at the upstream end of each branch corresponds to an assumed cause of the knowledge base table, and numbers in parentheses in FIGS. 7 and 8 correspond to the thick solid-line rectangles. Furthermore, each thin solid-line rectangle corresponds to an influence of the knowledge base table and represents an event that can be observed by the process data. For each of such influences, a calculation in accordance with a calculation method defined in the knowledge base table is performed. Furthermore, for each assumed cause, a determination model including a mathematical formula for performing the above calculation is defined, and can be used to detect an abnormality or a sign thereof and assist in specifying the cause.

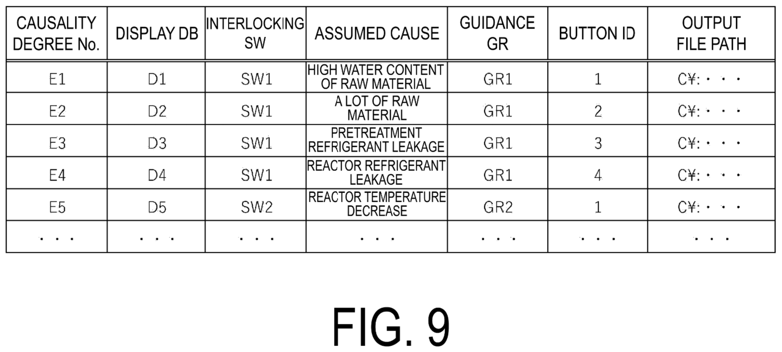

FIG. 9 is a diagram illustrating an example of the guidance definition stored in the storage device 42 of the operation assistance system 4. The guidance definition is a table including attributes of "causality degree No.", "display DB", "interlocking SW", "assumed cause", "guidance GR", "button ID", and "output file path". Note that the table may be a file read and written by spreadsheet software or a database management system, or may be a text file such as a comma-separated values (CSV) file. In the field of the causality degree No., for example, identification information corresponding to the assumed cause illustrated in FIG. 8 is registered. In the field of the display DB, a flag is registered to determine the need for highlighting a push button for displaying the assumed cause in the information indicating the operating state displayed on the user terminal 5 when the degree of causality of the assumed cause corresponding to each record of the guidance definition exceeds a predetermined threshold value. In the field of the interlocking SW, identification information of an annunciator that is issued from the control station 2 to the user terminal 5 is registered. In the field of the assumed cause, a character string is registered, which is information for explaining the cause of the abnormality or the sign thereof and is displayed on the user terminal 5. In the field of the guidance GR, identification information of a guidance screen to be displayed on the user terminal 5 is registered. Note that in the guidance screen, for example, a plurality of push buttons for displaying the assumed cause corresponding to each record are assumed to be displayed. In the field of the button ID, identification information of the push button for displaying the assumed cause corresponding to the record on the guidance screen is registered. In the field of the output file path, a path indicating a storage location of a file stored in the user terminal 5 is registered. The content of the file includes guidance information associated with the assumed cause. The guidance information includes, for example, a detailed description of an assumed cause such as an influence of an abnormal irregularity and an action for coping with the assumed cause. Note that, although the time required for reading and displaying the file can be shortened by storing the file in the user terminal 5, the file may be stored in the abnormality detection device 3 or the like. By using the guidance definition as illustrated in FIG. 9, information displayed on a screen output from the control station 2 to the user terminal 5 can be dynamically changed. In this way, for example, when the definition of an abnormality that may occur in the plant 1 or a sign thereof or a calculation method for the determination is added or changed, the system 100 can be modified by simply changing the knowledge base table or the determination model stored in the abnormality detection device 3, the guidance definition stored in the operation assistance system 4, and the guidance information read by the user terminal 5. That is, when the system 100 is modified, changes in the control station 2 and the operation assistance system 4 can be reduced, and thus new knowledge regarding the operation of the plant 1 can be quickly reflected in the procedure of the operation.

### Abnormality Detection Processing

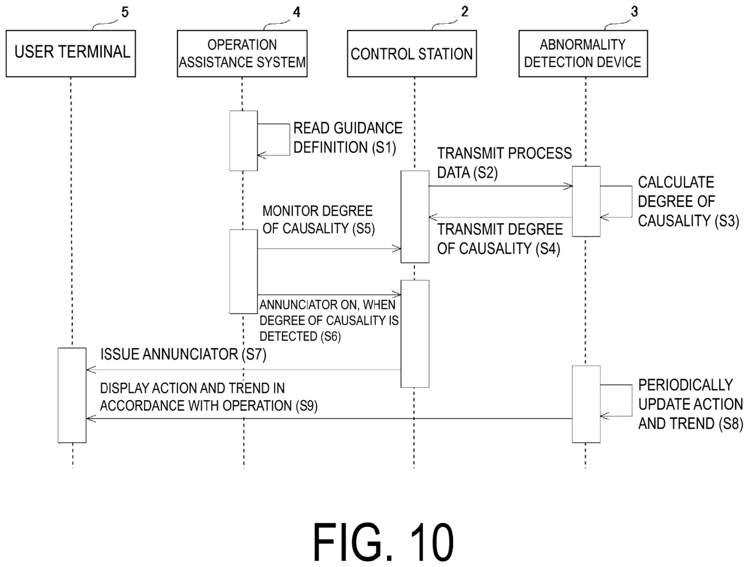

FIG. 10 is a schematic sequence diagram illustrating an example of abnormality detection processing. When the operation of the system 100 is started, first, the monitoring unit 411 of the operation assistance system 4 reads the guidance definition illustrated in FIG. 9 from the storage device 42 (FIG. 10: S1). The read guidance definition may be stored in a matrix variable stored in the main storage device, for example.

Subsequently, the cooperation unit 211 of the control station 2 continuously acquires the process data from the plant 1 and outputs the process data to the abnormality detection device 3 (FIG. 10: S2). On the other hand, the data acquisition unit 311 of the abnormality detection device 3 acquires the process data via the control station 2, and the abnormality determination unit 312 calculates the degree of causality of the causes of an abnormality or a sign thereof (FIG. 10: S3). The abnormality determination unit 312 can calculate the degree of causality by performing a calculation defined in advance by the knowledge base table illustrated in FIG. 7 and the determination model illustrated in FIG. 8. Furthermore, the abnormality determination unit 312 transmits the calculated degree of causality to the control station 2 and stores the degree of causality in the storage device 22. Note that the abnormality determination unit 312 may determine that the cause is established when the degree of causality exceeds a predetermined threshold value, and transmit information indicating whether the cause is established to the control station 2. The processes from S2 to S4 in FIG. 10 are continuously repeated.

Subsequently, the monitoring unit 411 of the operation assistance system 4 continuously monitors the degree of causality stored in the storage device 22 of the control station 2 (FIG. 10: S5). Subsequently, when information indicating that any of the causes is established is stored in the control station 2, the monitoring unit 411 turns on switch information SW serving as a trigger for the control station to issue an annunciator (FIG. 10: S6). In this step, the monitoring unit 411 transmits, to the control station 2, information registered in the guidance definition illustrated in FIG. 9 in association with the established cause. The switch information is assumed to be stored in the storage device 22 of the control station 2. Note that since a lot of switch information can be set corresponding to the degrees of causality of a plurality of assumed causes, the efficiency of a process of specifying an assumed cause, for which the degree of causality has changed, by converting the past degree of causality and the current degree of causality into 0 or 1, respectively, storing the converted values in matrix variables, and then calculating the difference between the matrix variables. Furthermore, the processes of S5 and S6 are continuously repeated.

When the switch information is turned on, the UI control unit 212 of the control station 2 issues an annunciator to the user terminal 5 (FIG. 10: S7). In this step, among the annunciators set in advance in the control station 2, an annunciator corresponding to the causality degree No. of the guidance definition is issued. Furthermore, in the information indicating the operating state of the plant 1 displayed on the monitor of the user terminal 5, the process in which the abnormality or the sign thereof is detected is highlighted. The portion to be highlighted is specified based on the information registered in the field of the interlocking SW of the guidance definition. The highlighting is performed, for example, by changing the color, pattern, shape, or the like of the process in the information representing the process sequence of the plant 1 in a bird's-eye view as illustrated in FIG. 2. Subsequently, in response to a user's operation on the user terminal 5, the UI control unit 212 transmits detailed information on the abnormality occurring in the process or the sign thereof to the user terminal 5 (FIG. 10: S9).

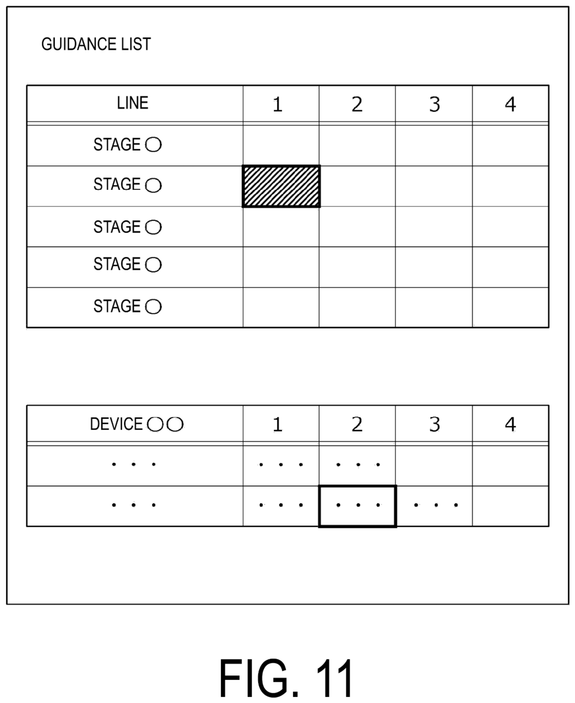

FIG. 11 is a diagram for explaining a guidance list as an example of the detailed information. The screen in FIG. 11 represents production lines included in the plant 1 and stages performed in the production lines, and includes a table in which a detection portion of an abnormality or a sign thereof can be highlighted and a table in which a tag representing a sensor provided at the portion can be highlighted. Among the information displayed in the guidance list, the production line, the stage, and the tag are set in advance based on the configuration of the plant 1. On the other hand, the portion to be highlighted can be dynamically changed in accordance with the information registered in the field of the interlocking SW in the guidance definition.

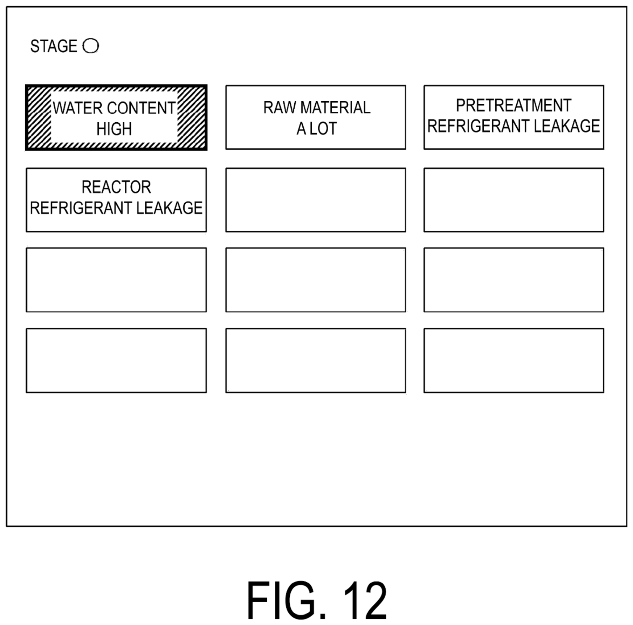

FIG. 12 is a diagram for explaining an assumed cause list as an example of the detailed information. The assumed cause list is displayed, for example, when any of the stages is selected in FIG. 11. The assumed cause list indicates a list of causes assumed for an abnormality that may occur in the selected stage or a sign thereof. One screen displays, for example, buttons corresponding to a plurality of records in which the same identification information is registered in the field of the guidance GR of the guidance list. A character string displayed on each button is a character string registered in the field of the assumed cause of the guidance list, and is mapped to a button corresponding to identification information registered in a button ID. Among the information displayed in the assumed cause list, a template such as a layout of buttons is defined in advance in the user terminal 5. On the other hand, a character string displayed on each button and a portion to be highlighted can be dynamically changed in accordance with the guidance definition or the like.

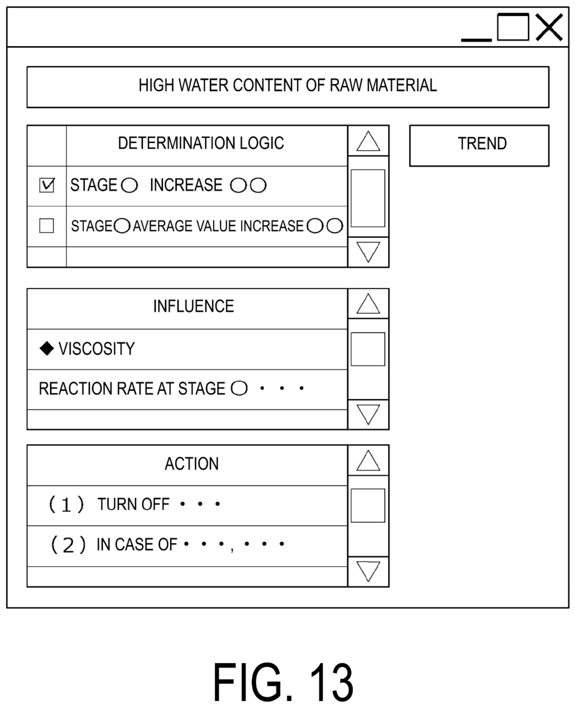

FIG. 13 is a diagram for explaining assumed cause guidance as an example of the detailed information. The assumed cause guidance is displayed, for example, when any button is selected in FIG. 12. The assumed cause guidance displays information on an assumed cause corresponding to the selected button. At least a part of the screen illustrated in FIG. 13 may be created by data that can be read and written by predetermined software such as spreadsheet software. In the example in FIG. 13, items of determination logic, influence, and action, and a "trend" button are displayed. The determination logic is an item for explaining the basis for specifying a cause. The influence is an item for explaining the influence of an abnormality or a sign thereof. The action is an item for explaining a countermeasure for suppressing an abnormal irregularity. In the item of the action, for example, an operation procedure for manually controlling the plant 1 is displayed. The information displayed in each item is described in, for example, an external file whose storage location is registered in the output file path of the guidance list.

The external file is periodically updated by the output generation unit 313 of the abnormality detection device 3 (FIG. 10: S8). The external file may include trend information or the like in which process data continuously output from the plant 1 is periodically reflected, in addition to the information displayed in each item of the assumed cause guidance. Furthermore, an operation amount corresponding to the process data (that is, the degree of the abnormality or the sign thereof) may be set in the information displayed in the item of the action. In this case, the output generation unit 313 outputs the operation amount to external data in S8. Note that the operation amount is a magnitude for changing the opening degree or the output of the device of the plant 1, and is obtained by a predetermined calculation according to the assumed cause or the process data. When the "trend" button in FIG. 13 is pressed, the trend information described in the external file is displayed. Details of the trend information and the action may be displayed by reading the external file itself by corresponding software.

As described above, the monitoring screen is created through cooperation between the control program of the DCS operating in the control station 2 and the user terminal 5. For example, among information displayed in the assumed cause guidance, a template such as the layout of a display area of an item is defined in advance in the user terminal 5. On the other hand, information displayed in each item can be dynamically changed in accordance with the guidance definition or the external file. That is, the monitoring screen can be changed without changing the control program of the DCS operating in the control station 2. Thus, maintenance of guidance displayed in accordance with an abnormality or the like can be facilitated. The layout of the display area of the item may also be read from the external file. The control station 2, the abnormality detection device 3, or the operation assistance system 4 may have an alarm aggregation function of associating a plurality of records registered in the guidance definition with one alarm set in an annunciator. The alarm aggregating function can be implemented by using an existing technique as disclosed in, for example, JP 2003-177818 A. In this way, the guidance can be added or modified without modifying the annunciator.

### Modified Examples

Each of the configurations, combinations thereof, and the like in each of the embodiments are examples, and additions, omissions, substitutions, and other changes of the configurations can be made as appropriate without departing from the spirit of the present disclosure. The present disclosure is not limited by the embodiments and is limited only by the claims. Each aspect disclosed in the present specification can be combined with any other feature disclosed in the present specification.

The embodiment has been described by using a chemical plant as an example, but can be applied to a manufacturing process in a general production facility. For example, instead of the product serial number of the batch stage in the embodiment, a lot number can be used as a transaction, and the processing according to the batch stage in the embodiment may be applied. The system 100 may also be a production facility controlled by using a programmable logic controller (PLC) instead of the DCS or in addition to the DCS.

At least some of the functions implemented by each device of the system 100 may be implemented by being distributed in a plurality of devices, or the same function may be provided by a plurality of devices in parallel. The functions implemented by a plurality of devices in the embodiment may also be implemented by one device.

Furthermore, the present disclosure includes a method for performing the above-described processing by one or more computers, a computer program, and a computer-readable recording medium storing the program. The recording medium storing the program enables the above-described processing by causing a computer to execute the program.

The computer-readable recording medium refers to a recording medium that can accumulate information such as data or programs by electrical, magnetic, optical, mechanical, or chemical actions and can be read from a computer. Among such recording media, examples of recording media detachable from a computer include flexible disks, magneto-optical disks, optical disks, magnetic tapes, memory cards, and the like. Furthermore, recording media fixed to a computer include HDDs, solid state drives (SSDs), ROMs, and the like.

### Reference Signs List

100: System, 1: Plant,
2: Control station, 211: Cooperation unit, 212: UI control unit,
3: Abnormality detection device, 311: Data acquisition unit, 312: Abnormality determination unit, 313: Output generation unit, 4: Operation assistance system, 411: Monitoring unit

## Claims

1. A guidance display method performed by one or more computers, the guidance display method comprising:
acquiring process data output by a sensor included in a production facility and providing a user terminal with a monitoring screen for monitoring a production process performed by the production facility, the monitoring screen including the process data;
calculating a degree of causality for each of a plurality of candidates for causes of an abnormality or a sign thereof by using the process data and a predetermined determination model;
specifying the cause of the calculated degree of causality satisfying a predetermined condition; and
outputting guidance information corresponding to the specified cause to the monitoring screen by using a guidance definition storing a plurality of combinations of the causes of the abnormality or the sign thereof and guidance information associated with the causes, wherein
the guidance information is changeable by updating the guidance definition.

2. The guidance display method according to claim 1, wherein
the guidance definition includes information to be displayed on a predetermined portion in a predetermined template of the monitoring screen and information for specifying a portion to be highlighted in the template.

3. The guidance display method according to claim 2, wherein
when the cause of the calculated degree of causality satisfying the predetermined condition is specified, the one or more computers determine an operation amount for a device included in the production facility, and
the monitoring screen displays the determined operation amount at a predetermined position in the template.

4. The guidance display method according to claim 2 or 3, wherein
the template is created in a file readable and writable by spreadsheet software.

5. The guidance display method according to any one of claims 2 to 4, wherein
the template is stored in a storage device of the user terminal.

6. The guidance display method according to any one of claims 1 to 5, wherein
one or more combinations stored in the guidance definition are associated with one alarm set in an annunciator, and an alarm associated with the cause of the calculated degree of causality satisfying the predetermined condition is issued.

7. The guidance display method according to any one of claims 1 to 6, wherein
the production facility is a chemical process plant, and
the monitoring screen is displayed in cooperation with a control program of a distributed control system (DCS).

8. A guidance display system comprising:
one or more computers configured to perform the guidance display method according to any one of claims 1 to 7.

9. A guidance display program causing one or more computers to perform the guidance display method according to any one of claims 1 to 7.
